# EUROPEAN PATENT APPLICATION

(11) **EP 4 727 262 A1**
(43) Date of publication of application: **15.04.2026**
(21) Application number: 24206177.8
(22) Date of filing: 11.10.2024
(51) Int. Cl.: H05B 47/125, H05B 47/13, H05B 47/175

(54) **A LIGHTING CONTROL SYSTEM AND A METHOD FOR CONTROLLING A LIGHTING SYSTEM**

(71) Applicant: Helvar Oy Ab, 02150 Espoo (FI)
(72) Inventor: JUSLÉN, Henri, 02150 Espoo (FI); TAKALA, Pasi, 02150 Espoo (FI); MÄKELÄ, Mikko, 02150 Espoo (FI)
(74) Representative: Väänänen, Janne Kalervo

(57) **Abstract**

A lighting control system comprises at least one imaging device (101) for producing at least one electronic image and at least one presence sensor (115a-115d) for detecting occupancy. The lighting control system comprises a controller (102) configured to run an artificial intelligence process to identify a type of an object presented by the electronic image and to control, when occupancy is detected, the lighting system based on the type identified by the artificial intelligence process. The identification of the type of the object makes it possible to control the lighting system in accordance with requirements specific to the identified type. For example, different lighting control can be used for an office worker who stays typically hours in an office than for a guard who walks through the office in few minutes.

## Description

### Field of the disclosure

The disclosure relates generally to facility management. More particularly, the disclosure specially relates to a lighting control system. Furthermore, the disclosure relates to a method and to a data processor program for controlling a lighting system.

### Background

A lighting system comprises typically a plurality of luminaires for illuminating different areas of a space. To save energy and/or for other reasons such as e.g. convenience reasons, the lighting system can be arranged to automatically switch off or dim down luminaires arranged to illuminate unoccupied areas and to switch on or brighten luminaires arranged to illuminate occupied areas. For that, a lighting system may comprise for example one or more presence sensors, and a lighting control system can be configured to turn lights on or brighten the lights when movement and/or presence is detected by one or more of the presence sensors. For example, a lighting system for illuminating a corridor may comprise several presence sensors along the corridor so that the corridor is illuminated in parts when a person moves along the corridor. Each presence sensor can be for example a passive infrared "PIR" sensor, a thermal camera, a low-resolution optical camera, a gigahertz-radar, or some other suitable sensor.

Lighting systems of the kind described above are, however, not free from challenges especially when presence sensors are cost effective and commonly used PIR sensors. One of the challenges can be illustrated with an exemplifying situation in which a PIR sensor has been activated by an office worker who works at a computer terminal and can stay still for long periods of time while focusing on a work-related problem. In this situation, the lighting system may deem that the office is unoccupied and starts to switch off or dim down luminaires arranged to illuminate the office to save energy. Thus, in this situation, the office worker may experience the lighting as unpleasant if a delay after which the lighting is turned off or dimmed down after a last detected movement is too short. On the other hand, long delays suitable for office workers may be non-optimal when e.g. a cleaner is working in the office or when a guard is checking that everything is fine in the office. Other exemplifying situations of the kind mentioned above are a situation where a person who knows a building is walking along a corridor and a situation where a visitor who does not know the building is walking along the corridor while looking for a certain room or another place of the building. In the first mentioned case, it typically suffices that only the part of the corridor on which the person is walking is well illuminated, whereas, in the second mentioned case, it would be difficult to find a correct place if only a part of the corridor is illuminated.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments.

In accordance with the invention, there is provided a new lighting control system. The lighting control system comprises:
- at least one imaging device, e.g. a camera, configured to produce at least one electronic image related to at least one imaging area within a field-of-view "FOV" of the imaging device,
- at least one presence sensor configured to produce sensor data expressing occupancy on at least one detection area, and
- a controller communicatively connected to the imaging device and to the presence sensor and configured to:
   - run an artificial intelligence "Al" process to identify a type of at least one object presented by the electronic image, and
   - control, in response to the occupancy expressed by the sensor data, the lighting system based on the type identified by the artificial intelligence process.

The object can be e.g. a human being, an animal, a vehicle, a manned or unmanned moving device such as a car or another vehicle, a drone, a robot, etc., an entity carried or moved by a human being or another being, e.g. a piece of clothing, an identification "ID" card, a bag, a shopping cart, a load of a lorry, a logo or another mark on a vehicle, etc. Thus, as evident to a skilled reader, there can be very many kinds of objects in conjunction with different embodiments of the invention.

The above-mentioned imaging area imaged by the at least one imaging device can be outside, partly outside, or inside a lighting area to be illuminated with one or more luminaires of the lighting system. Thus, the object whose type is identified can be on the lighting area to be illuminated or outside the lighting area e.g. so that the object can be entering the lighting area to be illuminated, watching the lighting area to be illuminated, or the object can be near the lighting area for some other reason.

The above-mentioned detection area monitored by the presence sensor can be outside, partly outside, or inside the lighting area to be illuminated with the one or more luminaires of the lighting system. Thus, the object whose presence is detected can be on the lighting area to be illuminated or outside the lighting area e.g. so that the object can be entering the lighting area to be illuminated, watching the lighting area to be illuminated, or the object can be near the lighting area for some other reason.

The above-mentioned imaging device can be e.g. a camera for visible light or a camera for invisible electromagnetic radiation such as infrared radiation "IR", ultraviolet radiation, or thermal radiation having a longer wavelength than IR. It is also possible that the imaging device is based on echo sounding or the imaging device is a radar or a lidar. Therefore, in this document the "electronic image" is to be understood in a broad sense to cover images generated in many ways.

The above-mentioned controller may have a centralized implementation so that the controller is a single device, or the controller may have a distributed implementation so that the controller comprises communicatively interconnected elements distances away from each other.

In a lighting control system according to an advantageous and non-limiting embodiment, the number of the presence sensors is greater than the number of the one or more imaging devices. This arrangement can be advantageous since a price of a presence sensor that can be e.g. a passive infrared "PIR" sensor is typically lower than a price of an imaging device that needs to be able to produce sufficiently high-quality electronic images for AI-based object-type identification. Furthermore, there can be other reasons, such as e.g. data security issues and/or privacy issues, because of which e.g. camaras are not wanted in certain places where presence sensors such as PIR sensors are applicable. The greater number of the spatially distributed presence sensors provide occupancy detection with a good spatial resolution and thus lights can be switched on or brightened selectively on those parts of the lighting area where light is each time needed. On the other hand, the imaging device, or each imaging device, can be placed to monitor e.g. a route to many of the above-mentioned parts of the lighting area so that types of objects arriving at these parts of the lighting area can be identified and thus the lights can be controlled in the above-mentioned parts of the lighting area in type-specific ways. As the type-identification and the presence detection are carried out by separate devices which can be in different places in the lighting system, the type-identification can also be utilized in control of luminaires which are distances away from the imaging device so that the luminaires illuminate an area that is outside the field-of-view "FOV" of the imaging device.

The identification of the type of the object, e.g. a human being, an animal, a vehicle, an unmanned moving device such as drones and robots, etc., makes it possible to control a lighting in accordance with requirements specific to the identified type. For example, in an office environment, different lighting control can be used for an office worker who stays hours in an office than for a guard who walks through the office within a short time. The type-identification can be based on e.g. clothing of persons in the office environment. For another example, in a hospital, medical doctors, nurses, patients, guards, and visitors dress differently and can be recognized by clothing. Thus, these person types can be treated differently by a lighting control e.g. in corridors. For a third example, in a store, sales personnel, cleaners, guards, and customers dress differently, and the customers may have shopping baskets and/or shopping carts. Thus, the type-identification can be based on clothing and/or on shopping baskets and/or shopping carts, and a lighting control can be adjusted accordingly. For a fourth example, a lighting control system according to an exemplifying and non-limiting embodiment can be configured to recognize cars, trucks, cyclist, and pedestrians which is/are on an area to be illuminated or which are entering or approaching the area, and the lighting control system can be configured to guide these with lights, e.g. showing a parking area for a car or a truck by using lights, showing a way to the parking area by using lights, showing a place with bicycle parking for a cyclist using lights, showing a nearest entrance to pedestrians using lights, and showing a loading place for a delivery transport vehicle using lights. Correspondingly, a lighting control system can be configured to show a walking route to a guard using lights in e.g. office environments, hospitals, and other areas to be guarded. Furthermore, in a lighting control system according to an exemplifying and non-limiting embodiment, the control of lights can made dependent on one or more other factors in addition to the identified type or types of one or more objects. For example, a given type-identification may lead to different lighting control depending on the time of day, weather, natural lighting conditions, and/or one or more other factors such as e.g. the number of same type identifications within a given time-window e.g. a day or certain hours of day. In a lighting control system according to an exemplifying and non-limiting embodiment, the AI-based type-identification is also utilized for other functionalities in addition to the lighting control. The information of an identified object type can be transferred to other systems like a facility management system for them to adjust to the identified object type. The other functionalities may include for example control of ventilation and/or air-conditioning, control of positions of curtains of windows, temperature control, voice control, etc. For further examples, a recognition of a cleaner in an office environment can be used for controlling electric furniture such as electric tables to their upmost position to ease cleaning, a recognition of a person with a wheelchair and/or a guide dog can be used for opening doors, a recognition of a visitor in an inappropriate place of e.g. a hospital can be used for informing and/or alarming guards and/or other security personnel, a recognition of a person carrying a dangerous item, such as a gun or a knife, can be used for informing and/or alarming other people e.g. by flashing lights and/or for informing and/or alarming guards and/or other security personnel. Furthermore, the AI-based type-identification can be used for collecting statistics about behavior of different personnel groups, e.g. routes of medical doctors, nurses, etc. in a hospital, routes of customers with a shopping basket and routes of customers with a shopping cart in a shop, etc. Collected history data about e.g. behavior of objects representing different types can be used for e.g. teaching the artificial intelligence "AI" to modify the lighting control to respond better to different needs of different types.

In an advantageous embodiment, the controller is configured run artificial intelligence "AI" -based lighting control of the lighting system in response to the occupancy expressed by the sensor data, and to supply training data to the AI-based lighting control to teach the AI-based lighting control to respond better to needs of the at least one object whose type has been identified.

In accordance with the invention, there is also provided a new lighting system that comprises:
- one or more luminaires, and
- a lighting control system according to the invention and configured to control at least the one or more luminaires.

In accordance with the invention, there is also provided a new method for controlling a lighting system. The method comprises:
- producing, with at least one imaging device, at least one electronic image related to at least one imaging area within a field-of-view of the imaging device,
- producing, with at least one presence sensor, sensor data expressing occupancy on at least one detection area,
- running an artificial intelligence process to identify a type of at least one object presented by the electronic image, and
- controlling, in response to the occupancy expressed by the sensor data, the lighting system based on the type identified by the artificial intelligence process.

In accordance with the invention, there is also provided a new data processor program for controlling a lighting system. The data processor program comprises instructions for controlling a programmable data processor system to:
- receive, from at least one imaging device, at least one electronic image related to at least one imaging area within a field-of-view of the imaging device,
- receive, from at least one presence sensor, sensor data expressing occupancy on at least one detection area,
- run an artificial intelligence process to identify a type of at least one object presented by the electronic image, and
- control, in response to the occupancy expressed by the sensor data, the lighting system based on the type identified by the artificial intelligence process.

The above-mentioned data processor program can be called a computer program provided that a computer is understood in a broad sense so that e.g. a programmable controller or another programmable device is deemed to be a computer.

In accordance with the invention, there is also provided a new data processor program product. The data processor program product comprises a non-volatile data processor readable medium encoded with a data processor program according to the invention.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features.

Furthermore, it is to be understood that the use of "a" or "an", i.e. a singular form, throughout this document does not exclude a plurality.

The features recited in dependent claims are mutually freely combinable unless otherwise explicitly stated.

### Brief description of the figures

Exemplifying and non-limiting embodiments and their advantages are explained in greater detail below with reference to the accompanying drawings, in which:
figure 1 illustrates a lighting system according to an exemplifying and non-limiting embodiment,
figure 2 illustrates a lighting system according to an exemplifying and non-limiting embodiment, and
figure 3 shows a flowchart of a method according to an exemplifying and non-limiting embodiment for controlling a lighting system.

### Description of exemplifying and non-limiting embodiments

The specific examples provided in the description below should not be construed as limiting the scope and/or the applicability of the invention. Lists and groups of examples provided in the description below are not exhaustive unless otherwise explicitly stated.

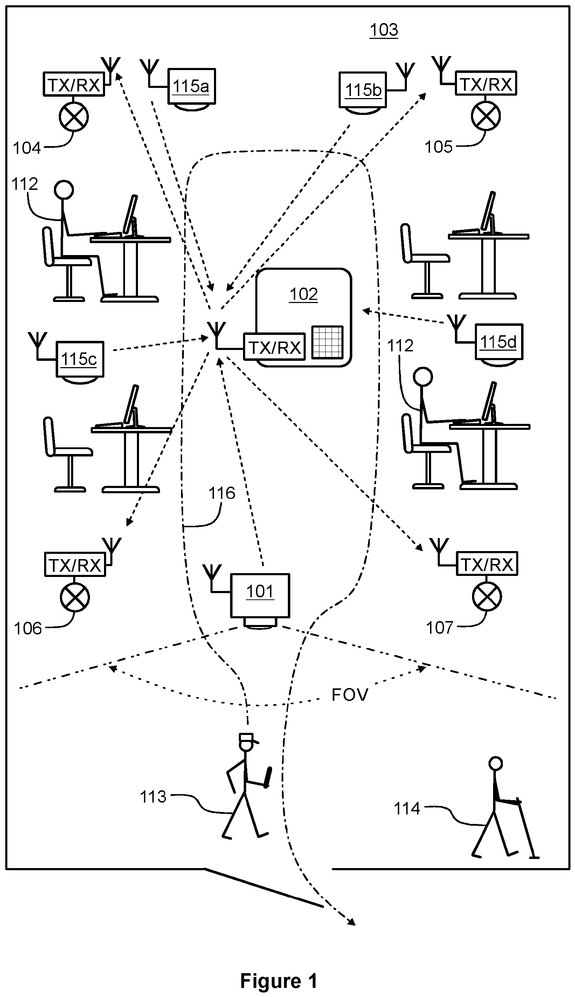

Figure 1 illustrates a lighting system according to an exemplifying and non-limiting embodiment. The lighting system comprises luminaires 104, 105, 106, and 107. In this exemplifying case, a lighting area 103 to be illuminated with the luminaires 104-107 is an office. The lighting system comprises a lighting control system according to an exemplifying and non-limiting embodiment for controlling the lighting system and thereby the luminaires 104-107. Thus, the lighting control system is a part of the lighting system. Furthermore, the luminaires 104-107 can be manually controllable with control means such as e.g. switches.

The lighting control system comprises an imaging device 101 configured to produce at least one electronic image. The imaging device 101 can be for example a camera configured to produce electronic still-images at successive moments of time, or the imaging device 101 can be a video-camera configured to produce an electronic video-image. The imaging device 101 is configured to produce the electronic image of an imaging area, i.e. a field-of-view "FOV" of the imaging device 101. In this exemplifying case, the imaging area is a part the lighting area 103 to be illuminated with the luminaires 104-107. It is also possible that the lighting control system comprises one or more imaging devices configured to produce one or more electronic images of one or more areas outside the lighting area 103, e.g. an area outside the office and in front of the door of the office to monitor objects approaching the door.

The lighting control system comprises presence sensors 115a, 115b, 115c, and 115d each configured to produce sensor data expressing occupancy on a detection area monitored by the presence sensor under consideration. Each of the presence sensors 115a-115d can be for example a passive infrared "PIR" sensor, a thermal camera, a low-resolution optical camera, a gigahertz-radar, or some other suitable sensor.

The lighting control system comprises a controller 102 that is communicatively connected to the imaging device 101, to the presence sensors 115a-115d, and to the luminaires 104-107. Thus, the controller 102 is a part of the lighting control system. The controller 102 is configured to run an artificial intelligence "Al" process to identify a type of at least one object presented by the above-mentioned electronic image. The controller 102 can be supplied with suitable training data to train the AI process to carry out the identification process in a desired way. The AI-based type-identification can be based on for example division of the electronic image into recognizable elements such as a button, a sleeve, a man, a woman, a uniform, a nose, a book, etc. and on recognizing mutual relationships between these elements like "a man in a uniform is standing and observing his environment". A structure of an electronic image can be compared to a model composed of predefined examples. When there is a given correlation level between the structure of the electronic image and a model, it can be concluded that the electronic image shows a given object type, e.g. "a cleaner", or a given functionality, e.g. "a man is controlling a dog" corresponding to the model.

The controller 102 is configured to control, in response to occupancy detected by one or more of the presence sensors 115a-115d, the lighting system based on the type identified by the artificial intelligence process. Thus, the lighting control triggered by the occupancy detections can be tailored for different types of objects in accordance with specific needs of the objects and/or specific needs of people related to the objects, e.g. people having the objects in shopping carts. In addition to the type, the lighting control can be dependent on other information such as the time of day, weather, natural lighting conditions, and/or one or more other factors such as e.g. the number of same type identifications within a given time-window e.g. a day or certain hours of day, etc. It is also possible that the controller 102 is configured to ask the AI to inform the controller whether an object or objects representing a given type or types is/are shown in the electronic image and/or the controller 102 is configured to instruct the AI to inform the controller when the electronic image shows an object or objects representing a given type or types.

In the exemplifying case shown in figure 1 and related to the office environment, an object is a human-being and the type of the object can be "an office worker", "a guard", "a cleaner", or "another type" of a person. The controller 102 can be configured to identify the type of an object for example so that the object under consideration is classified to correspond to one of pre-determined types which may comprise the above-mentioned: "an office worker", "a guard", "a cleaner", and "another type". In an exemplifying case, the controller 102 can be configured to determine, based on the sensor data produced by the presence sensors, which one or ones of the luminaires 104-107 of the lighting system is/are to be activated to increase light emission, i.e. switched on or brightened. Furthermore, the controller 102 can be configured to determine, based on the identified type, a light emission level, e.g. as 0 - 100%, for the one or ones of the luminaires determined to be activated and a delay after which the light emission is reduced, i.e. these luminaires are switched off or dimmed down, after a most recent occupancy detection by the presence sensors. In this exemplifying case, the light emission level and the delay can be selected, based on the identified type, from among type-specific values corresponding to different pre-determined types. Furthermore, the type-identification can also be utilized for other functionalities in addition to the lighting control. The other functionalities may include for example control of ventilation and/or air-conditioning, control of positions of curtains of windows, temperature control, voice control, control of electric furniture such as electric tables, etc. Data about actions and/or events, e.g. which one or ones of the presence sensors are activated, taking place after recognition of one or more objects representing one or more given types can be delivered to the AI to teach the AI to control the lighting to respond better to needs of the type or types under consideration.

In the exemplifying situation shown in figure 1, there are two office workers 112 in the office. In this exemplifying case, the light emission level of the luminaires 104 and 107 can be a first light emission level, e.g. 60% of the maximum level, and the delay value can be a first delay value e.g. 10 minutes, whereas the luminaires 105 and 106 can be switched off or dimmed down to the light emission level of e.g. 30 % of the maximum level. In another exemplifying situation where an object in the office has been identified to be a cleaner 114, the light emission level of a luminaire which is, according to the sensor data produced by the presence sensors 115a-115d, closest to the cleaner 114 can be a second light emission level e.g. 100 % of the maximum level, the light emission levels of other ones of the luminaires can be e.g. 70 % of the maximum, and the delay value can be a second delay value e.g. 1 minute. The second light emission level is advantageously higher than the first light emission level used with the office workers 112 to enable the cleaner 114 to clearly see all areas in the office, including areas under tables and chairs and corner areas. On the other hand, the cleaner 114 is constantly moving and thus the second delay value can be smaller than the first delay value used with the office workers 112. In a third exemplifying situation, there is only a guard 113 in the office. In this third exemplifying situation, the light emission level can be a third light emission level, e.g. 30% of the maximum level, and the delay value can be a third delay value e.g. 30 seconds because the guard 113 walks through the office in few tens of seconds and is constantly moving. In figure 1, the moving path of the guard 113 is depicted with a dash-and-dot line 116. The controller 102 can be configured to control the luminaires 104-107 so that the luminaires are brightened, or switched on, and then dimmed down, or switched off, in the following sequence to show to the guard 113 a route to walk through in the office: luminaire 106 - luminaire 104 - luminaire 105 - luminaire 107 if a first detection of motion is done by the presence sensor 115c, or in the following sequence corresponding to an opposite direction: luminaire 107 - luminaire 105 - luminaire 104 - luminaire 106 if a first detection of motion is done by the presence sensor 115d.

In the exemplifying lighting control system illustrated in figure 1, the controller 102 comprises a transceiver TX/RX for receiving image data from the imaging device 101, for receiving the sensor data from the presence sensors 115a-115d, and for transmitting control data to control the luminaires 104-107. In the exemplifying case illustrated in figure 1, the controller 102 comprises a wireless transceiver. Wireless data transfer to and from the controller 102 can be based on e.g. the Bluetooth Low Energy "BLE" network technology, the Zigbee network technology, the Thread network technology, or some other suitable wireless data transfer technology. It is however also possible that the data transfer or a part of it is implemented with corded links. For example, a lighting control system according to an exemplifying and non-limiting embodiment can be implemented with a corded data transfer system that uses the Digital Addressable Lighting Interface "DALI" technology. In principle, the DALI technology is applicable in conjunction with wireless data transfer technologies, too. Figure 1 shows dashed line arrows depicting data transfer from the imaging device 101 and from the presence sensors 115a-115d to the controller 102 and data transfer from the controller 102 to the luminaires 104-107. In some cases, there can be data network elements between the controller 102 and the imaging device 101 and/or the presence sensors 115a-115d and/or between the controller 102 and the luminaires 104-107. It is however advantageous that the image data produced by the imaging device 101 is not delivered to any external data network, e.g. the Internet, to avoid data security risks since the electronic image may present e.g. recognizable faces of persons and/or some other non-public and confidential information.

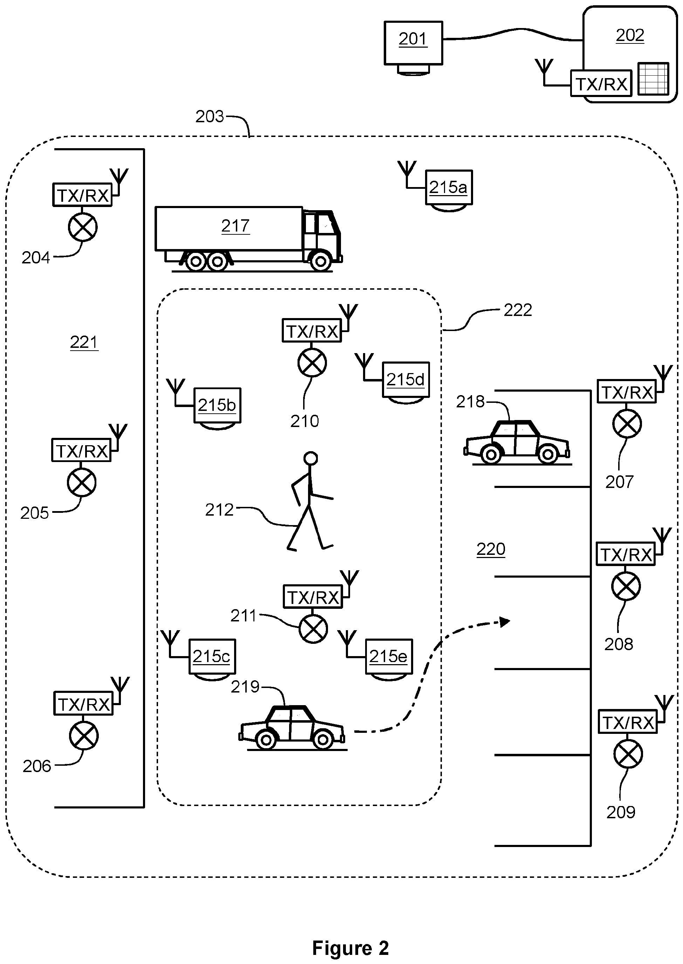

Figure 2 illustrates a lighting system according to an exemplifying and non-limiting embodiment. The lighting system comprises luminaires 204, 205, 206, 207, 208, 209, 210, and 211 for illuminating an area 203. In this exemplifying case, the area 203 comprises a loading dock 221 for loading and unloading goods to and from trucks and illuminated with the luminaires 204-206, a parking area 220 for cars and illuminated with the luminaires 207-209, and a yard-area 222 between the parking area 220 and the loading dock 221 and illuminated with the luminaires 210 and 211. The lighting system comprises a lighting control system according to an exemplifying and non-limiting embodiment for controlling the lighting system comprising the luminaires 204-211, the lighting control system being a part of the lighting system. Furthermore, the luminaires 204-211 can be manually controllable with control means such as e.g. switches.

The lighting control system comprises an imaging device 201 configured to produce at least one electronic image. In this exemplifying case, the electronic image is taken of the area 203. The imaging device 201 can be a camera configured to produce electronic still-images at successive moments of time, or the imaging device 201 can be a video-camera configured to produce an electronic video-image. It is also possible that the lighting control system comprises one or more imaging devices configured to produce one or more electronic images of different parts of the area 203. These parts of the area 203 can be e.g. the loading dock 221, the yard-area 221, and the parking area 220. It is also possible that the lighting control system comprises one or more imaging devices configured to produce one or more electronic images of one or more areas outside the area 203, e.g. of an area through which cars and/or trucks enter and leave the area 203.

The lighting control system comprises presence sensors 215a, 215b, 215c, 215d, and 215e each configured to produce sensor data expressing occupancy on a detection area monitored by the presence sensor under consideration. Each of the presence sensors 215a-215e can be for example a passive infrared "PIR" sensor, a thermal camera, a low-resolution optical camera, a gigahertz-radar, or some other suitable sensor.

The lighting control system comprises a controller 202 that is communicatively connected to the imaging device 201, to the presence sensors 215a-215e, and to the luminaires 204-211. Thus, the controller 202 is a part of the lighting control system. The controller 202 is configured to run an artificial intelligence "AI" process to identify a type of at least one object presented by the above-mentioned electronic image. The controller 202 is configured to control, in response to occupancy detected by one or more of the presence sensors 215a-215e, the lighting system based on the type identified by the artificial intelligence process. Thus, the lighting control triggered by the occupancy detections can be tailored for different types of objects in accordance with specific needs of the objects. In addition to the type, the lighting control can be dependent on other information such as the time of day, weather, natural lighting conditions, and/or one or more other factors such as e.g. the number of same type identifications within a given time-window e.g. a day or certain hours of day, etc.

In the exemplifying case shown in figure 2, a type of an object can be "a car", "a truck", "a human", or "another type". The other type may include for example animals and unmanned moving objects. The controller 202 can be configured to identify the type of an object for example so that the object under consideration is classified to correspond to one of pre-determined types which may comprise the above-mentioned: "a car", "a truck", "a human", and "another type". In an exemplifying case, the controller 102 can be configured to determine, based on the identified type, which one or ones of the luminaires 204-211 of the lighting system is/are to be activated to increase light emission, i.e. switched on or brightened, and the controller 102 can be configured to activate, in response to occupancy expressed by the sensor data, these one or ones of the luminaires determined to be activated. Furthermore, the controller 102 can be configured to determine, based on the identified type, a light emission level for these one or ones of the luminaires and a delay value determining a delay after which the light emission is reduced, i.e. the one or ones of the luminaires are dimmed down or switched off, after a most recent motion detected on the area 203 or on a part of the area 203. For example, if the identified type is "a car", the luminaires 207-209 of the parking area 220 and the luminaires 210 and 211 of the yard-area 222 are selected to be activated in response to presence detection by one or more of the presence sensors 215a-215e. Thus, the parking area 220 and the yard-area 222 are illuminated. The light emission level of the luminaires 207-209 can be e.g. 100 % of the maximum to enable a car driver to clearly see the parking area 220 and the light emission level of the luminaires 210 and 211 can be e.g. 60 % of the maximum. The delay value related to the luminaires 207-209 can be e.g. 5 minutes, and the delay value related to the luminaires 210-211 can be e.g. 2 minutes. For another example, if the identified type is "a truck", the luminaires 204-206 of the loading dock 221 and the luminaires 210 and 211 of the yard-area 222 are selected to be activated in response to presence detection of one or more of the presence sensors 215a-215e. Thus, the loading dock 221 and the yard-area 222 are illuminated. The light emission level of the luminaires 204-206 can be e.g. 100 % of the maximum to enable a truck driver to clearly see the loading dock 221 when reversing to the loading dock. The light emission level of the luminaires 210 and 211 can be e.g. 60 % of the maximum. The delay value related to the luminaires 204-206 can be e.g. 20 minutes to keep the luminaires 204-206 activated when persons loading and/or unloading the truck are not in the vicinity of the truck 217 but they are e.g. inside a terminal building. The delay value related to the luminaires 210 and 211 can be e.g. 2 minutes. If a presence of a human 212 or another object such as an animal on the area 203 is detected, i.e. an object is identified to be a human or an object other than a human or a vehicle, the light emission level of the luminaires 210 and 211 is advantageously 100 % of the maximum to enable car drivers and truck drivers to clearly see the human 212 or the other object such as an animal. In a lighting control system according to an exemplifying and non-limiting embodiment, the controller 202 is configured to control the luminaires so that the luminaires guide a driver of a truck or a car to a parking place allocated to this truck or car. Luminaires can be used as route guides in many other environments, too. For example, in a hospital, luminaires can be used to guide staff such as doctors and nurses, patients, and/or visitors, and, in a garage hall, luminaires can be used to guide pedestrians to a nearest door, etc. The controller 102 shown in figure 1 as well as the controller 202 shown in figure 2 can be implemented with one or more data processors each of which can be a programmable data processor provided with an appropriate software, a dedicated hardware data processor such as for example an application specific integrated circuit "ASIC", or a configurable hardware data processor such as for example a field programmable gate array "FPGA". Furthermore, the controller 102 shown in figure 1 as well as the controller 202 shown in figure 2 may comprise one or more memory devices such as e.g. one or more random-access memory "RAM" circuits.

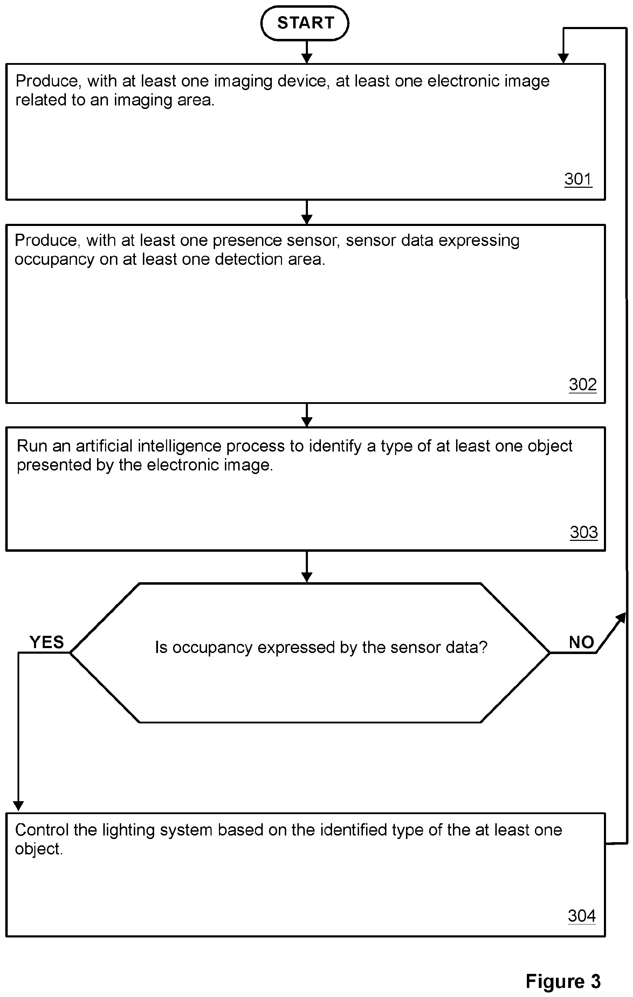

Figure 3 shows a flowchart of a method according to an exemplifying and non-limiting embodiment for controlling a lighting system. The method comprises the following actions:
- action 301: producing, with at least one imaging device, at least one electronic image related to at least one imaging area within a field-of-view of the imaging device,
- action 302: producing, with at least one presence sensor, sensor data expressing occupancy on at least one detection area,
- action 303: running an artificial intelligence "AI" process to identify a type of at least one object presented by the electronic image, and
- action 304: controlling, in response to the occupancy expressed by the sensor data, the lighting system based on the type identified by the artificial intelligence process.

In a method according to an exemplifying and non-limiting embodiment, the imaging area belongs at least partly to a lighting area to be illuminated with one or more luminaires of the lighting system.

In a method according to an exemplifying and non-limiting embodiment, the imaging area is at least partly outside the lighting area to be illuminated with the one or more luminaires of the lighting system.

In a method according to an exemplifying and non-limiting embodiment, the detection area belongs at least partly to the lighting area to be illuminated with the one or more luminaires of the lighting system.

In a method according to an exemplifying and non-limiting embodiment, the detection area is at least partly outside the lighting area to be illuminated with the one or more luminaires of the lighting system.

In a method according to an exemplifying and non-limiting embodiment, the type of the object is identified so that the object is classified to correspond to one of pre-determined types.

A method according to an exemplifying and non-limiting embodiment comprises controlling the lighting system with an artificial intelligence "AI" -based lighting control in response to the occupancy expressed by the sensor data, and supplying training data to the AI-based lighting control to teach the AI-based lighting control to respond to needs of the at least one object whose type has been identified.

A method according to an exemplifying and non-limiting embodiment comprises:
- determining, based on the type identified, a light emission level for one or more luminaires of the lighting system and a delay after which light emission of the one or more luminaires is reduced after a most recent occupancy detection by the presence sensor, and
- activating, in response to the occupancy expressed by the sensor data, the one or more luminaires of the lighting system to increase the light emission to the light emission level.

A method according to an exemplifying and non-limiting embodiment comprises:
- determining, based on the type identified, which one or ones of the luminaires of the lighting system is/are to be activated to increase light emission, and
- activating, in response to the occupancy expressed by the sensor data, the one or ones of the luminaires determined to be activated.

In a method according to an exemplifying and non-limiting embodiment, the above-mentioned one or ones of the luminaires determined to be activated are luminaires configured to illuminate a passageway for the at least one object to guide movement of the at least one object.

In a method according to an exemplifying and non-limiting embodiment, the presence sensor is one of two or more presence sensors, the detection area is one of two or more at least partially non-overlapping detection areas, and each of the presence sensors is configured to detect occupancy on a corresponding one of the detection areas.

In a method according to an exemplifying and non-limiting embodiment, the imaging device is one of one or more imaging devices, and the number of the presence sensors is greater than the number of the one or more imaging devices.

A method according to an exemplifying and non-limiting embodiment comprises:
- determining, based on the sensor data produced by the above-mentioned two or more presence sensors, which one or ones of the luminaires of the lighting system is/are to be activated to increase light emission, and
- determining, based on the type identified, a light emission level for these one or ones of the luminaires being activated and a delay after which the light emission of these one or ones of the luminaires is reduced after a most recent occupancy detection by the presence sensors.

A method according to an exemplifying and non-limiting embodiment is carried out in an office environment, and the method comprises:
- setting the above-mentioned light emission level to be a first light emission level and the above-mentioned delay to be a first delay when the type of the object is an office worker,
- set the light emission level to be a second light emission level greater than the first light emission level and the delay to be a second delay shorter than the first delay when the type of the object is a cleaner, and
- set the light emission level to be a third light emission level less than the second light emission level and the delay to be a third delay shorter than the second delay when the type of the object is a guard.

A data processor program according to an exemplifying and non-limiting embodiment comprises data processor executable instructions for controlling a programmable data processor system to carry out actions related to a method according to any of the above-described exemplifying embodiments.

A data processor program according to an exemplifying and non-limiting embodiment comprises software modules for controlling a lighting system. The software modules comprise data processor executable instructions for controlling a programmable data processor system to:
- receive, from at least one imaging device, at least one electronic image related to at least one imaging area within a field-of-view of the imaging device,
- receive, from at least one presence sensor, sensor data expressing occupancy on at least one detection area,
- run an artificial intelligence process to identify a type of at least one object presented by the electronic image, and
- control, in response to the occupancy expressed by the sensor data, the lighting system based on the type identified by the artificial intelligence process.

The above-mentioned software modules can be e.g. subroutines or functions implemented with a programming language suitable for the programmable data processor system.

A data processor program product according to an exemplifying and non-limiting embodiment comprises a data processor readable medium encoded with a data processor program according to an embodiment of invention.

A non-transitory processor readable medium according to an exemplifying and non-limiting embodiment is encoded with a data processor program according to an embodiment of invention.

A signal according to an exemplifying and non-limiting embodiment is encoded to carry information defining a data processor program according to an embodiment of invention.

The specific examples provided in the description given above should not be construed as limiting the scope and/or the applicability of the invention. Lists and groups of examples provided in the description given above are not exhaustive unless otherwise explicitly stated.

## Claims

1. A lighting control system comprising:
- at least one imaging device (101, 201) configured to produce at least one electronic image related to at least one imaging area within a field-of-view of the imaging device, and
- at least one presence sensor (115a-115d, 215a-215e) configured to produce sensor data expressing occupancy on at least one detection area,
**characterized in that** the lighting control system comprises a controller (102, 202) communicatively connected to the imaging device and to the presence sensor and configured to:
- run an artificial intelligence process to identify a type of at least one object presented by the electronic image, and
- control, in response to the occupancy expressed by the sensor data, a lighting system based on the type identified by the artificial intelligence process.

2. A lighting control system according to claim 1, wherein the imaging area belongs at least partly to a lighting area to be illuminated with one or more luminaires of the lighting system.

3. A lighting control system according to claim 1, wherein the imaging area is at least partly outside a lighting area to be illuminated with one or more luminaires of the lighting system.

4. A lighting control system according to any one of claims 1-3, wherein the detection area belongs at least partly to a lighting area to be illuminated with one or more luminaires of the lighting system.

5. A lighting control system according to any one of claims 1-4, wherein the controller is configured to identify the type so that the object is classified to correspond to one of pre-determined types.

6. A lighting control system according to any one of claims 1-5, wherein the controller is configured to control the lighting system with an artificial intelligence - based lighting control in response to the occupancy expressed by the sensor data, and to supply training data to the artificial intelligence -based lighting control to teach the artificial intelligence -based lighting control to respond to needs of the at least one object.

7. A lighting control system according to any one of claims 1-6, wherein the controller is configured to:
- determine, based on the type identified, a light emission level for one or more luminaires of the lighting system and a delay after which light emission of the one or more luminaires is changed after a most recent occupancy detection by the presence sensor, and
- activate, in response to the occupancy expressed by the sensor data, the one or more luminaires of the lighting system to adjust the light emission to the light emission level.

8. A lighting control system according to any one of claims 1-6, wherein the controller is configured to:
- determine, based on the type identified, which one or ones of luminaires of the lighting system is/are to be activated to adjust light emission, and
- activate, in response to the occupancy expressed by the sensor data, the one or ones of the luminaires determined to be activated.

9. A lighting control system according to claim 8, wherein the one or ones of the luminaires determined to be activated are luminaires configured to illuminate a passageway for the at least one object to guide movement of the at least one object.

10. A lighting control system according to any one of claims 1-9, wherein the presence sensor is one of two or more presence sensors (115a-115d, 215a-215e), the detection area is one of two or more at least partially non-overlapping detection areas, and each of the presence sensors is configured to detect occupancy on a corresponding one of the detection areas.

11. A lighting control system according to claim 10, wherein the imaging device (101, 210) is one of one or more imaging devices, and number of the presence sensors is greater than number of the one or more imaging devices.

12. A lighting control system according to claim 10 or 11, wherein the controller is configured to:
- determine, based on the sensor data produced by the presence sensors, which one or ones of luminaires of the lighting system is/are to be activated to adjust light emission, and
- determine, based on the type identified, a light emission level for these one or ones of the luminaires being activated and a delay after which the light emission of these one or ones of the luminaires is changed after a most recent occupancy detection by the presence sensors.

13. A lighting control system according to claim 7 or 12, wherein the controller is configured to:
- set the light emission level to be a first light emission level and the delay to be a first delay when the type of the object is an office worker,
- set the light emission level to be a second light emission level greater than the first light emission level and the delay to be a second delay shorter than the first delay when the type of the object is a cleaner, and
- set the light emission level to be a third light emission level less than the second light emission level and the delay to be a third delay shorter than the second delay when the type of the object is a guard.

14. A lighting system comprising:
- one or more luminaires (104-107, 204-211), and
- a lighting control system according to any one of claims 1-13 and configured to control at least the one or more luminaires.

15. A method for controlling a lighting system, the method comprising:
- producing (301), with at least one imaging device, at least one electronic image related to at least one imaging area within a field-of-view of the imaging device, and
- producing (302), with at least one presence sensor, sensor data expressing occupancy on at least one detection area,
**characterized in that** the method comprises:
- running (303) an artificial intelligence process to identify a type of at least one object presented by the electronic image, and
- controlling (304), in response to the occupancy expressed by the sensor data, the lighting system based on the type identified by the artificial intelligence process.

16. A data processor program for controlling a lighting system, the data processor program comprising data processor executable instructions for controlling a programmable data processor system to:
- receive, from at least one imaging device, at least one electronic image related to at least one imaging area within a field-of-view of the imaging device, and
- receive, from at least one presence sensor, sensor data expressing occupancy on at least one detection area,
**characterized in that** the data processor program comprises data processor executable instructions for controlling the programmable data processor system to:
- run an artificial intelligence process to identify a type of at least one object presented by the electronic image, and
- control, in response to the occupancy expressed by the sensor data, the lighting system based on the type identified by the artificial intelligence process.

## Amended claims

### Amended claims in accordance with Rule 137(2) EPC.

1. A lighting control system comprising:
- an imaging device (101, 201) configured to produce at least one electronic image related to at least one imaging area within a field-of-view of the imaging device, and
- a presence sensor (115a-115d, 215a-215e) configured to produce sensor data expressing occupancy on a detection area,
wherein the lighting control system comprises a controller (102, 202) communicatively connected to the imaging device and to the presence sensor and configured to:
- run an artificial intelligence process to identify a type of at least one object presented by the at least one electronic image, and
- control, in response to the occupancy expressed by the sensor data, a lighting system based on the type identified by the artificial intelligence process,
wherein the presence sensor is one of two or more presence sensors (115a-115d, 215a-215e), the detection area is one of two or more at least partially non-overlapping detection areas, each of the presence sensors is configured to detect occupancy on a corresponding one of the detection areas, and the imaging device (101, 210) is one of one or more imaging devices, **characterized in that** number of the presence sensors is greater than number of the one or more imaging devices.

2. A lighting control system according to claim 1, wherein the imaging area belongs at least partly to a lighting area to be illuminated with one or more luminaires of the lighting system.

3. A lighting control system according to claim 1, wherein the imaging area is at least partly outside a lighting area to be illuminated with one or more luminaires of the lighting system.

4. A lighting control system according to any one of claims 1-3, wherein the detection area belongs at least partly to a lighting area to be illuminated with one or more luminaires of the lighting system.

5. A lighting control system according to any one of claims 1-4, wherein the controller is configured to identify the type so that the object is classified to correspond to one of pre-determined types.

6. A lighting control system according to any one of claims 1-5, wherein the controller is configured to control the lighting system with an artificial intelligence - based lighting control in response to the occupancy expressed by the sensor data, and to supply training data to the artificial intelligence -based lighting control to teach the artificial intelligence -based lighting control to respond to needs of the at least one object.

7. A lighting control system according to any one of claims 1-6, wherein the controller is configured to:
- determine, based on the type identified, a light emission level for one or more luminaires of the lighting system and a delay after which light emission of the one or more luminaires is changed after a most recent occupancy detection by the presence sensor, and
- activate, in response to the occupancy expressed by the sensor data, the one or more luminaires of the lighting system to adjust the light emission to the light emission level.

8. A lighting control system according to any one of claims 1-6, wherein the controller is configured to:
- determine, based on the type identified, which one or ones of luminaires of the lighting system is/are to be activated to adjust light emission, and
- activate, in response to the occupancy expressed by the sensor data, the one or ones of the luminaires determined to be activated.

9. A lighting control system according to claim 8, wherein the one or ones of the luminaires determined to be activated are luminaires configured to illuminate a passageway for the at least one object to guide movement of the at least one object.

10. A lighting control system according to any one of claims 1-9, wherein the controller is configured to:
- determine, based on the sensor data produced by the presence sensors, which one or ones of luminaires of the lighting system is/are to be activated to adjust light emission, and
- determine, based on the type identified, a light emission level for these one or ones of the luminaires being activated and a delay after which the light emission of these one or ones of the luminaires is changed after a most recent occupancy detection by the presence sensors.

11. A lighting control system according to claim 7 or 10, wherein the controller is configured to:
- set the light emission level to be a first light emission level and the delay to be a first delay when the type of the object is an office worker,
- set the light emission level to be a second light emission level greater than the first light emission level and the delay to be a second delay shorter than the first delay when the type of the object is a cleaner, and
- set the light emission level to be a third light emission level less than the second light emission level and the delay to be a third delay shorter than the second delay when the type of the object is a guard.

12. A lighting system comprising:
- one or more luminaires (104-107, 204-211), and
- a lighting control system according to any one of claims 1-11 and configured to control at least the one or more luminaires.

13. A method for controlling a lighting system, the method comprising:
- producing (301), with one or more imaging devices, one or more electronic images related to one or more imaging areas within one or more fields-of-views of the one or more imaging devices,
- producing (302), with two or more presence sensors, sensor data expressing occupancy on two or more at least partially non-overlapping detection areas,
- running (303) an artificial intelligence process to identify a type of at least one object presented by the one or more electronic images, and
- controlling (304), in response to the occupancy expressed by the sensor data, the lighting system based on the type identified by the artificial intelligence process,
**characterized in that** number of the presence sensors is greater than number of the one or more imaging devices.

14. A data processor program for controlling a lighting system, the data processor program comprising data processor executable instructions for controlling a programmable data processor system to:
- receive, from one or more imaging devices, one or more electronic images related to one or more imaging areas within one or more fields-of-views of the one or more imaging device,
- receive, from two or more presence sensors, sensor data expressing occupancy on two or more at least partially non-overlapping detection areas,
- run an artificial intelligence process to identify a type of at least one object presented by the one or more electronic images, and
- control, in response to the occupancy expressed by the sensor data, the lighting system based on the type identified by the artificial intelligence process,
**characterized in that** number of the presence sensors is greater than number of the one or more imaging devices.
